# EUROPÄISCHE PATENTSCHRIFT

(11) **EP 3 947 998 B1**
(45) Veröffentlichungstag und Bekanntmachung des Hinweises auf die Patenterteilung: **21.02.2024**
(21) Anmeldenummer: 20711046.1
(22) Anmeldetag: 03.03.2020
(51) Int. Cl.: F16D 1/08

(54) **SPANNVERBINDUNG MIT EINEM AUF EINER NABE, INSBESONDERE HOHLWELLENABSCHNITT, AUFGESTECKTEN SPANNRING MIT SCHRAUBE, INSBESONDERE SPANNSCHRAUBE**
CLAMPING CONNECTION WITH A CLAMPING RING MOUNTED ON A HUB, IN PARTICULAR A HOLLOW SHAFT SECTION, COMPRISING A SCREW, IN PARTICULAR A CLAMPING SCREW
ASSEMBLAGE PAR SERRAGE COMPORTANT UNE BAGUE DE SERRAGE MONTÉE SUR UN MOYEU, EN PARTICULIER UNE PARTIE D'ARBRE CREUX, ET DOTÉE D'UNE VIS, EN PARTICULIER UNE VIS DE SERRAGE,

(30) Priorität: 02.04.2019 DE 102019002366
(43) Veröffentlichungstag der Anmeldung: 09.02.2022
(73) Patentinhaber: SEW-EURODRIVE GmbH & Co. KG, 76646 Bruchsal (DE)
(72) Erfinder: SCHILLINGER, Jens, 76437 Rastatt (DE); WÖPPERMANN, Markus, 76307 Karlsbad (DE)
(86) Internationale Anmeldenummer: PCT/EP2020/025110
(87) Internationale Veröffentlichungsnummer: WO 2020/200512

(56) Entgegenhaltungen:
- DE-A1-102018 006 592
- DE-U1- 20 112 928

## Beschreibung

Die Erfindung betrifft eine Spannverbindung mit einem auf einer Nabe, insbesondere Hohlwellenabschnitt, aufgesteckten Spannring mit Schraube, insbesondere Spannschraube.

Es ist allgemein bekannt, dass eine Spannverbindung eine kraftschlüssige Verbindung ist.

Aus der DE 10 2018 006 592 A1 ist eine gattungsgemäße Spannverbindung bekannt.

**Aus der** DE 201 12 928 U1 **ist die Verbindung einer geschlitzten Hohlwelle mit einem in sie eingreifenden Gegenstück bekannt.**

Der Erfindung liegt daher die Aufgabe zugrunde, eine Spannverbindung mit optimierter Kraftverteilung weiterzubilden.

Erfindungsgemäß wird die Aufgabe bei der Spannverbindung nach den in Anspruch 1 angegebenen Merkmalen gelöst.

Wichtige Merkmale der Erfindung bei der Spannvorrichtung sind, dass die Spannverbindung mit einem auf einer Nabe, insbesondere Hohlwellenabschnitt, aufgesteckten Spannring mit Schraube, insbesondere Spannschraube,
wobei eine weitere Welle, insbesondere ein Vollwellenabschnitt einer weiteren Welle, in die Nabe eingesteckt ist,
wobei der Spannring einen bezogen auf die Wellenachse in axialer Richtung durchgehenden und in radialer Richtung durchgehenden Schlitz aufweist,
wobei ein Sicherungsring zwischen Nabe und Spannring angeordnet ist, insbesondere zur axialen Sicherung und Verdrehsicherung des Spannrings an der Nabe,
wobei die Nabe einen ersten und einen zweiten Axialschlitz aufweist, wobei der erste Axialschlitz in Umfangsrichtung beabstandet ist vom zweiten Axialschlitz,
wobei der Sicherungsring einen nach radial innen, in den ersten oder zweiten Axialschlitz der Nabe hervorragenden Bereich aufweist,
wobei der Sicherungsring einen, zwei oder mehrere nach radial außen, in den Schlitz hineinragenden Bereich aufweist.

Von Vorteil ist dabei, dass der Schlitz mittels des Sicherungsrings an derjenigen Umfangsposition festlegbar ist, welche durch den in den Axialschlitz hineinragenden Sicherungsring bestimmt ist. Denn der Sicherungsring ermöglicht in Zusammenwirkung mit dem Axialschlitz eine axiale Sicherung und der Sicherungsring eine in Umfangsrichtung wirkende Verdrehsicherung. Somit ist die am Umfang vorgesehene Kraftverteilung optimiert vorsehbar, indem bei der Montage die vorgesehene Positionierung definiert erzeugbar ist. Allerdings muss hierfür an der Innenseite des Spannrings und an der Außenseite der Nabe jeweils eine Ringnut zur Aufnahme des Sicherungsrings vorgesehen werden.

Erfindungsgemäß weist die Nabe zumindest einen in radialer Richtung durchgehenden Axialschlitz auf,
insbesondere wobei der Axialschlitz in axialer Richtung nicht durchgehend und in Umfangsrichtung ebenfalls nicht durchgehend ausgeführt ist. Von Vorteil ist dabei, dass die Nabe beim Spannen elastischer auslenkbar ist als ohne Axialschlitz. Durch den Axialschlitz wird aber eine besondere Kraftverteilung am Umfang erzeugt. Die Positionierung in Umfangsrichtung ist somit wichtig zur Erreichung der vorgesehenen Kraftverteilung.

**Erfindungsgemäß** ist die Schraube tangential gerichtet, bezogen auf die Wellenachse. Von Vorteil ist dabei, dass der Spannring in einfacher Weise auf die Welle aufschrumpfbar ist. Außerdem ist eine in Umfangsrichtung vorgesehene Verteilung der Spannkraft erreichbar.

Bei einer vorteilhaften Ausgestaltung ist der Axialschlitz der Nabe zur Umgebung hin offen ausgeführt, insbesondere also in die Umgebung mündet. Von Vorteil ist dabei, dass die Nabe elastisch verformbar ist, wobei eine vorgesehene Kraftverteilung am Umfang erzielbar ist.

Bei einer vorteilhaften Ausgestaltung ragt der Sicherungsring teilweise in eine am Spannring, insbesondere an der der Nabe zugewandten Innenseite des Spannrings, eingebrachte Ringnut und teilweise in eine an der Nabe eingebrachte Ringnut hinein. Von Vorteil ist dabei, dass eine in axialer Richtung formschlüssige Sicherung bewirkbar ist und somit der Spannring an der vorgesehenen axialen Position haltbar ist.

Bei einer vorteilhaften Ausgestaltung weist die Nabe einen weiteren Axialschlitz auf, welcher in Umfangrichtung beabstandet ist vom ersten Axialschlitz,
wobei der Sicherungsring einen weiteren nach radial innen hervorragenden Bereich aufweist, welcher in den weiteren Axialschlitz zumindest teilweise hineinragt, insbesondere zur Verbesserung der Verdrehsicherung des Sicherungsrings selbst. Von Vorteil ist dabei, dass über die Kraftverteilung hinaus auch die Massenverteilung an der mit der Nabe mitdrehenden Spannverbindung wohldefiniert ist und somit bei Montage die immer gleichen Verhältnisse erreichbar sind.

Bei einer vorteilhaften Ausgestaltung ragen die nach radial außen hervorragenden Bereiche des Sicherungsrings beidseitig der an einer Umfangsstelle angeordneten Unterbrechung des Sicherungsrings in den Schlitz hinein. Jeder der Bereiche darf also an einer den Schlitz begrenzenden Fläche anliegen. Von Vorteil ist dabei, dass somit eine spielfreie Verdrehsicherung für den Sicherungsring gegenüber dem Spannring bewirkbar.

Wichtige Merkmale bei dem Getriebemotor mit Adapter mit einer vorgenannten Spannverbindung sind, dass die Nabe eine Adapterwelle des Adapters ist und die weitere Welle eine Rotorwelle eines Elektromotors des Getriebemotors ist,
wobei die Adapterwelle mittels eines in einem Gehäuseteil des Adapters aufgenommenen Lagers drehbar gelagert ist.

Von Vorteil ist dabei, dass eine Motorwelle mit einer Adapterwelle verbindbar ist, wobei eine vorgesehene Kraftverteilung am Umfang erreichbar ist.

Bei einer vorteilhaften Ausgestaltung ist die Adapterwelle drehfest mit einer eintreibenden Welle eines Getriebes verbunden. Von Vorteil ist dabei, dass ein hohes Drehmoment effektiv übertragbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

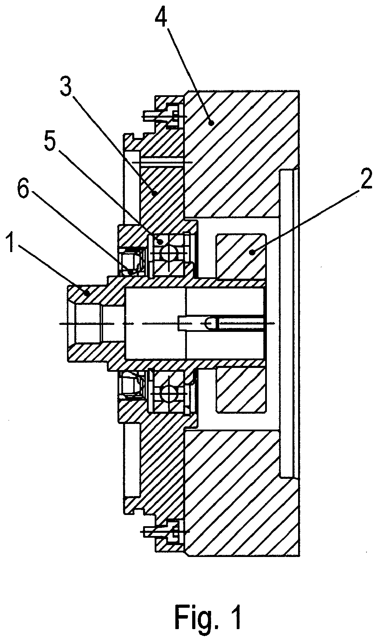

In der Figur 1 ist ein zwischen einem Elektromotor und einem Getriebe vorsehbarer Adapter im Querschnitt dargestellt, welcher eine als kraftschlüssige Welle-Nabe-Verbindung ausgeführte Spannverbindung umfasst.

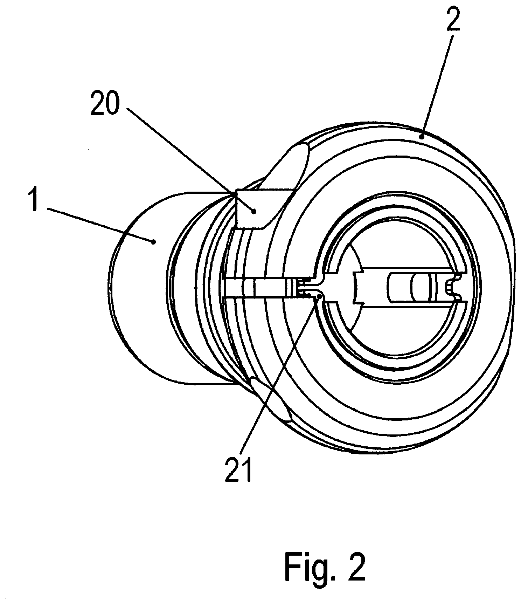

In der Figur 2 ist die Spannverbindung in Schrägansicht dargestellt.

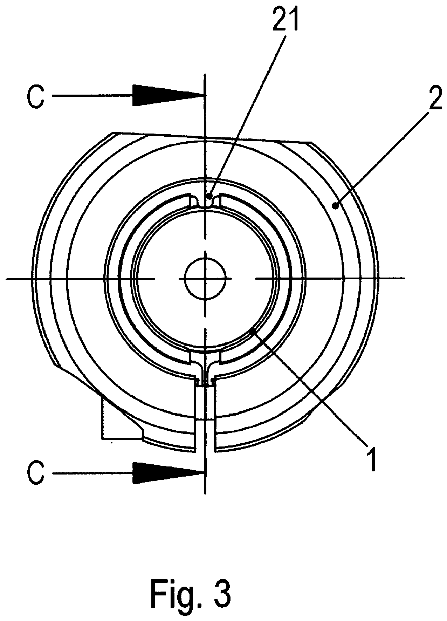

In der Figur 3 ist eine Draufsicht auf die Spannverbindung dargestellt.

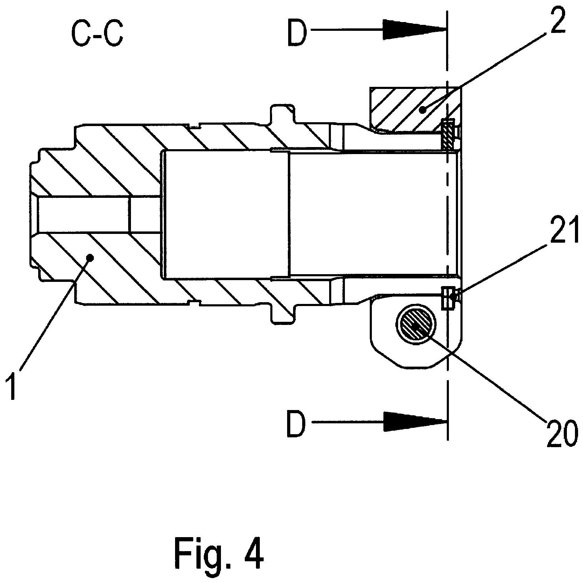

In der Figur 4 ist ein Längsschnitt durch die Spannverbindung dargestellt.

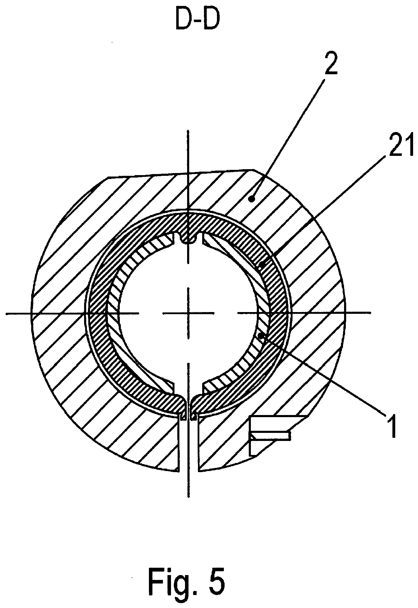

In der Figur 5 ist ein Querschnitt durch die Spannverbindung dargestellt.

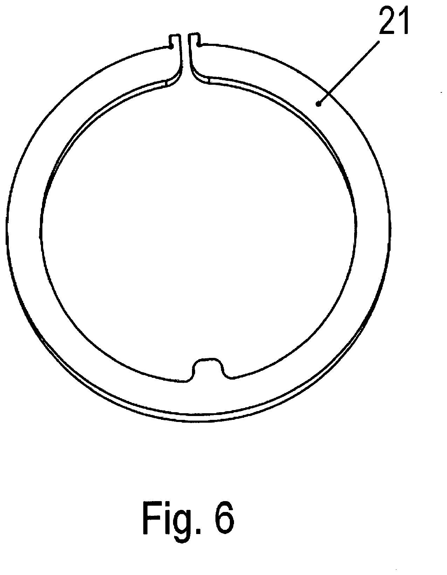

In der Figur 6 ist ein Sicherungsring 21 in Schrägansicht dargestellt.

Wie in den Figuren dargestellt, ist auf einen Hohlwellenabschnitt der den Hohlwellenabschnitt 1 aufweisenden Welle ein Spannring 2 aufgesteckt, welcher mittels einer zur Wellenachse tangential ausgerichteten Schraube 20 eine in den Hohlwellenabschnitt eingesteckte, in den Figuren nicht dargestellte Vollwelle kraftschlüssig mit dem Hohlwellenabschnitt 1 verbindet.

Die den Hohlwellenabschnitt 1 aufweisenden Welle ist auch als Nabe ausführbar oder bezeichenbar.

Die den Hohlwellenabschnitt 1 aufweisenden Welle ist mittels eines in einem ersten Gehäuseteil 3 aufgenommenen Lager 5 drehbar gelagert. Außerdem ist auch ein Wellendichtring 6 im ersten Gehäuseteil 3 aufgenommen, wobei der Wellendichtring 6 auf der äußeren Oberfläche der den Hohlwellenabschnitt 1 aufweisenden Welle läuft.

Das erste Gehäuseteil 3 ist als Adaptergehäuse ausführbar und verbindbar mit einem zweiten vorzugsweise mehrstückig ausgeführten Gehäuseteil, welches diejenigen Lager aufnimmt, mittels derer die in den Figuren nicht dargestellte Vollwelle drehbar gelagert ist.

Der Spannring 2 weist an seinem Umfang einen axial durch den Spannring 2 durchgehenden und in radialer Richtung durch den Spannring 2 durchgehenden Schlitz auf.

Die Schraube 20 ragt durch eine tangential gerichtete Ausnehmung des Spannrings 2 hindurch sowie durch den Schlitz und ist mit ihrem Gewindebereich in eine Gewindebohrung des Spannrings 2 eingeschraubt. Der Schlitz ist zwischen der Gewindebohrung und der Ausnehmung angeordnet.

Der Hohlwellenabschnitt weist einen ersten Axialschlitz auf, welcher radial durchgehend ist und axial sich bis zum Rand des Hohlwellenabschnitts erstreckt und somit in die Umgebung mündet.

Der Hohlwellenabschnitt weist einen zweiten Axialschlitz auf, welcher radial durchgehend ist und axial sich bis zum Rand des Hohlwellenabschnitts erstreckt und somit in die Umgebung mündet.

Der zweite Axialschlitz ist vom ersten Axialschlitz in Umfangsrichtung beabstandet, insbesondere 180° in Umfangsrichtung. Somit ist der Hohlwellenabschnitt schon mit einer geringen Schrumpfkraft oder Spannkraft auf die Vollwelle spannbar, insbesondere aufschrumpfbar.

Mittels eines Sicherungsrings 21 ist eine Axialsicherung des Spannrings 2 bewirkt.

Hierzu ist eine in Umfangsrichtung an der Innenseite des Spannrings umlaufende Ringnut in den Spannring 2 eingearbeitet, in welche der Sicherungsring 21 bei Montage eingelegt wird. Außerdem ist eine in Umfangsrichtung umlaufende Ringnut am radial äußeren Umfang des Hohlwellenabschnitts, also der Nabe, eingearbeitet, in welche der Sicherungsring 21 teilweise hineinragt, weil eine Formschräge im Bereich der Nutwand der Ringnut des Hohlwellenabschnitts beim Aufstecken des Spannrings 2 auf den Hohlwellenabschnitt 1 den Sicherungsring 21 in die Ringnut des Spannrings 2 radial aufweitend hineindrückt, bis der Sicherungsring 21 sich zumindest teilweise in die Ringnut des Hohlwellenabschnitts hineinentspannt.

Der erste Axialschlitz und der zweite Axialschlitz sind zu einem einzigen axialen Endbereich des Hohlwellenabschnitts zur Umgebung hin offen. Beide sind also nicht axial vollständig durchgehend ausgeführt.

Der Sicherungsring 21 an einer Umfangsstelle unterbrochen ausgeführt ist. Somit ist er elastisch leicht verformbar.

Bei der Montage wird er ein wenig zusammengedrückt und dann in die Ringnut des Spannrings 2 entspannt. Diese Ringnut ist jedoch derart radial erstreckt, dass beim Einschieben des Hohlwellenabschnitts 1 in den Spannring 2, also beim Aufstecken des Spannrings 2 auf den Hohlwellenabschnitt 1 der Sicherungsring 21 aufgeweitet wird in die Ringnut des Spannrings 2 hinein. Diese Ringnut ist also entsprechend radial weit aufgedehnt ausgeführt.

Der Schraubenkopf der Schraube 20 drückt beim Einschrauben der Schraube 20 in die Gewindebohrung des Spannrings 2 auf einen am Spannring 2 ausgebildeten Absatz, so dass der Spannring 2 derart verengt wird, dass die tangentiale Breite des Schlitzes abnimmt und die Spannkraft entsprechend zunimmt.

Der Sicherungsring 21 weist einen nach radial innenhervorragenden Bereich auf, welcher in den zweiten Axialschlitz des Hohlwellenabschnitts 1 hineinragt. Außerdem weist der Sicherungsring 21 beidseitig derjenigen Umfangsstelle, an welcher er unterbrochen ausgeführt ist jeweils einen nach radial außen hervorragenden Bereich auf. Diese beiden nach radial außen hervorragenden Bereiche ragen in den Schlitz des Spannrings hinein.

Auf diese Weise vermittelt der Sicherungsring 21 einerseits die Verdrehsicherung in Umfangsrichtung, weil der Spannring 2 in Umfangsrichtung formschlüssig mit dem Sicherungsring 21 verbunden ist, der aber ebenso in Umfangsrichtung formschlüssig mit dem Hohlwellenabschnitt 1 verbunden ist.

Der Sicherungsring 21 ist aber auch als Axialsicherung wirksam, da er sowohl in die am Spannring ausgebildete Innenringnut als auch in die an dem Hohlwellenabschnitt ausgebildete Ringnut hineinragt.

Bei weiteren erfindungsgemäßen Ausführungsbeispielen weist der Sicherungsring 21 ragen die beidseitig der Umfangsstelle der Unterbrechung des Sicherungsrings 21 nicht nur nach radial außen hervor, sondern auch nach radial innen hervor. Auf diese Weise ist eine doppelte Sicherung nach radial innen ausgeführt. Der andere nach radial innen in den zweiten Axialschlitz hervorragende Bereich darf bei weiteren erfindungsgemäßen Ausführungsbeispielen dann sogar entfallen.

Bei weiteren erfindungsgemäßen Ausführungsbeispielen sind im Hohlwellenabschnitt 1 insgesamt drei oder mehr Axialschlitz ausgebildet. Der Sicherungsring 21 muss nicht aber darf dann auch weitere nach radial innen hervorragend Bereiche aufweisen, welche in die Axialschlitze hineinragen. Einer dieser Bereiche darf auch in den ersten Axialschlitz hineinragen.

Der Sicherungsring 21 ist als Stanzteil ausführbar und dabei aus einem Metallblech herstellbar.

Vorzugsweise ist der Sicherungsring 21 axial beabstandet von dem von der Schraube 20 in axialer Richtung überdeckten Bereich.

Vorzugswiese liegt der nach radial innen hervorragende jeweilige Bereich in Umfangsrichtung und entgegen der Umfangsrichtung an den den jeweiligen Axialschlitz begrenzenden Flächen des Hohlwellenabschnitts an. Somit liegt also kein Spiel vor zwischen dem Sicherungsring 21 und dem Hohlwellenabschnitt.

Ebenso ist aber auch das Spiel zwischen den beidseitig der Unterbrechung nach radial außen in den Schlitz des Spannrings hervorragenden Bereiche und dem Spannring verhinderbar, in dem dieses Bereich an den den Schlitz begrenzenden Flächen anliegen.

Somit ist der Spannring 2 durch die Sicherungsring 21 in Zusammenwirkung mit dem Schlitz des Spannrings und dem zweiten oder ersten Axialschlitz der Nabe gegen Verdrehen in Umfangsrichtung gesichert.

Auf diese Weise ist mittels des Sicherungsrings 21 erreicht, dass der erste Axialschlitz und der Schlitz des Spannrings 2 an derselben Umfangsstelle sich befinden.

Bei weiteren erfindungsgemäßen Ausführungsbeispielen werden die nach radial außen hervorragenden Bereiche des Sicherungsrings 21 im Schlitz beim Einschrauben der Schraube 20 in die Gewindebohrung vom Spannring 2 gegeneinander eingeklemmt, insbesondere so, dass also das Spiel verschwindet.

Auf diese Weise ist die Spannkraft, also Klemmkraft, auf einen maximalen Betrag begrenzbar.

Außerdem ist die Schraube 20 auf diese Weise gegen Überlastung schützbar, da bei Verschwinden des Spiels das notwendige Anzugsmoment der Schraube plötzlich stark ansteigt und somit das Verschwinden des Spiels deutlich und einfach erkennbar ist und/oder bei Verwendung eines Drehmomentschlüssels kein weiteres Anziehen der Schraube erfolgen kann.

Die Wellenachse ist die Drehachse der Welle. Die radiale, axiale und Umfangs-Richtung sind auf diese Wellenachse bezogen.

### Bezugszeichenliste

1 Hohlwellenabschnitt
2 Spannring
3 Gehäuseteil
4 Gehäuseteil
5 Lager
6 Wellendichtring
20 Schraube
21 Sicherungsring

## Patentansprüche

1. Spannverbindung mit einem auf einer Nabe, insbesondere Hohlwellenabschnitt (1), aufgesteckten Spannring (2) mit Schraube (20), insbesondere Spannschraube,
wobei eine weitere Welle, insbesondere ein Vollwellenabschnitt einer weiteren Welle, in die Nabe eingesteckt ist,
wobei der Spannring (2) einen bezogen auf die Wellenachse in radialer Richtung durchgehenden Schlitz aufweist,
**wobei** ein Sicherungsring (21) zwischen Nabe und Spannring (2) angeordnet ist, zur axialen Sicherung und Verdrehsicherung des Spannrings (2) an der Nabe,
wobei die Nabe einen ersten und einen zweiten Axialschlitz aufweist, wobei der erste Axialschlitz in Umfangsrichtung beabstandet ist vom zweiten Axialschlitz,
wobei der Sicherungsring (21) einen nach radial innen, in den ersten oder zweiten Axialschlitz der Nabe hervorragenden Bereich aufweist,
wobei der Sicherungsring (21) einen, zwei oder mehrere nach radial außen in den Schlitz hineinragende Bereiche aufweist,
**dadurch gekennzeichnet, dass**
der Schlitz in axialer Richtung bezogen auf die Wellenachse durchgehend ist,
und **Schraube (20) tangential gerichtet ist bezogen auf die Wellenachse.**

2. Spannverbindung nach Anspruch 1,
**dadurch gekennzeichnet, dass**
der erste Axialschlitz in axialer Richtung nicht durchgehend und in Umfangsrichtung ebenfalls nicht durchgehend ausgeführt ist,
und/oder dass
der zweite Axialschlitz in axialer Richtung nicht durchgehend und in Umfangsrichtung ebenfalls nicht durchgehend ausgeführt ist.

3. Spannverbindung nach einem der vorangegangenen Ansprüche,
**dadurch gekennzeichnet, dass**
der erste Axialschlitz der Nabe zur Umgebung hin offen ausgeführt ist, insbesondere also in die Umgebung mündet
und/oder dass
der zweite Axialschlitz der Nabe zur Umgebung hin offen ausgeführt ist, insbesondere also in die Umgebung mündet.

4. Spannverbindung nach einem der vorangegangenen Ansprüche,
**dadurch gekennzeichnet, dass**
der Sicherungsring (21) teilweise in eine am Spannring (2), insbesondere an der der Nabe zugewandten Innenseite des Spannrings (2), eingebrachte Ringnut und teilweise in eine an der Nabe eingebrachte Ringnut hineinragt.

5. Spannverbindung nach einem der vorangegangenen Ansprüche,
**dadurch gekennzeichnet, dass**
der Sicherungsring (21) einen weiteren nach radial innen hervorragenden Bereich aufweist, welcher in den jeweils anderen oder einen weiteren Axialschlitz zumindest teilweise hineinragt, insbesondere zur Verdrehsicherung des Sicherungsrings (21) selbst.

6. Spannverbindung nach einem der vorangegangenen Ansprüche,
**dadurch gekennzeichnet, dass**
die nach radial außen hervorragenden Bereiche des Sicherungsrings (21) beidseitig der an einer Umfangsstelle angeordneten Unterbrechung des Sicherungsrings (21) in den Schlitz hineinragen.

7. Spannverbindung nach einem der vorangegangenen Ansprüche,
**dadurch gekennzeichnet, dass**
wobei der Sicherungsring (21) als Stanzteil aus Blech gefertigt ist.

8. Getriebemotor mit Adapter mit einer Spannverbindung nach einem der vorangegangenen Ansprüche,
wobei die Nabe eine Adapterwelle des Adapters ist und die weitere Welle eine Rotorwelle eines Elektromotors des Getriebemotors ist,
**dadurch gekennzeichnet, dass**
die Adapterwelle mittels eines in einem Gehäuseteil (3, 4) des Adapters aufgenommenen Lagers (5) drehbar gelagert ist.

9. Getriebemotor nach einem der vorangegangenen Ansprüche,
**dadurch gekennzeichnet, dass**
die Adapterwelle drehfest mit einer eintreibenden Welle eines Getriebes verbunden ist.

## Claims

1. A clamping connection having a clamping ring (2), mounted on a hub, in particular a hollow shaft portion (1), with a screw, in particular a clamping screw,
wherein a further shaft, in particular a solid shaft portion of a further shaft, is inserted into the hub,
wherein the clamping ring (2) has a slot which, related to the shaft axis, is through-passing in a radial direction,
wherein a retaining ring (21) is arranged between hub and clamping ring (2), for axial securing and protection against twisting of the clamping ring (2) at the hub,
wherein the hub has a first and a second axial slot, wherein the first axial slot is spaced apart from the second axial slot in a circumferential direction,
wherein the retaining ring (21) has a region which projects radially inwards into the first or second axial slot of the hub,
wherein the retaining ring (21) has one, two or a plurality of regions projecting radially outwards into the slot.
**characterised in that**
the slot is through-passing in an axial directed related to the shaft axis and the screw (20) is directed tangentially related to the shaft axis.

2. A clamping connection according to claim 1,
**characterised in that**
the first axial slot is not through-passing in an axial direction and likewise is not through-passing in a circumferential direction,
and/or **in that**
the second axial slot is not through-passing in an axial direction and likewise is not through-passing in a circumferential direction.

3. A clamping connection according to any one of the preceding claims,
**characterised in that**
the first axial slot of the hub is open towards the surroundings, in particular therefore issues to the surroundings
and/or **in that**
the second axial slot of the hub is open towards the surroundings, in particular therefore issues to the surroundings.

4. A clamping connection according to any one of the preceding claims,
**characterised in that**
the retaining ring (21) projects partially into an annular groove made at the clamping ring (2), in particular at the clamping-ring inner side facing the hub, and partially into an annular groove made at the hub.

5. A clamping connnection according to any one of the preceding claims,
**characterised in that**
the retaining ring (21) has a further, radially inwards projecting region which projects at least partially into the respective other or a further axial slot, in particular for anti-twist protection of the retaining ring (21) itself.

6. A clamping connection according to any one of the preceding claims,
**characterised in that**
the radially outwards projecting regions of the retaining ring (21) project into the slot, on both sides of the retaining-ring interruption arranged at a circumferential location.

7. A clamping connection according to any one of the preceding claims,
**characterised in that**
wherein the retaining ring (21) is manufactured as a stamped part made of sheet metal.

8. A geared motor with adaptor having a clamping connection according to any one of the preceding claims,
wherein the hub is an adaptor shaft of the adaptor and the further shaft is a rotor shaft of an electric motor of the geared motor,
**characterised in that**
the adaptor shaft is rotatably mounted by means of a bearing (5) received in a housing part (3, 4) of the adaptor.

9. A geared motor according to any one of the preceding claims,
**characterised in that**
the adaptor shaft is connected to an input shaft of a gear unit in a rotationally-fixed manner.

## Revendications

1. Liaison par serrage pourvue d'une bague de serrage (2) emboîtée sur un moyeu, notamment sur un tronçon (1) d'arbre creux et munie d'une vis (20), d'une vis de serrage en particulier,
un arbre supplémentaire, notamment un tronçon d'un arbre plein supplémentaire, étant emboîté dans ledit moyeu,
ladite bague de serrage (2) étant dotée d'une fente ininterrompue dans la direction radiale par rapport à l'axe de l'arbre,
une bague d'arrêt (21) étant interposée entre le moyeu et la bague de serrage (2) en vue de l'arrêt axial et du blocage rotatoire de ladite bague de serrage (2) sur ledit moyeu,
lequel moyeu comporte des première et seconde fentes axiales, la première fente axiale étant située à distance de la seconde fente axiale dans la direction du pourtour,
la bague d'arrêt (21) présentant une région dépassant radialement, vers l'intérieur, dans la première ou la seconde fente axiale du moyeu,
ladite bague d'arrêt (21) comprenant une, deux ou plusieurs région(s) qui pénètre(nt) radialement dans la fente, vers l'extérieur,
**caractérisée par le fait que**
la fente est ininterrompue par rapport à l'axe de l'arbre, dans la direction axiale,
et la vis (20) est orientée tangentiellement par rapport audit axe de l'arbre.

2. Liaison par serrage selon la revendication 1,
**caractérisée par le fait que**
la première fente axiale n'est pas de réalisation ininterrompue dans la direction axiale, et semblablement pas ininterrompue dans la direction du pourtour ;
et/ou **par le fait que**
la seconde fente axiale n'est pas de réalisation ininterrompue dans ladite direction axiale, et semblablement pas ininterrompue dans ladite direction du pourtour.

3. Liaison par serrage selon l'une des revendications précédentes,
**caractérisée par le fait que**
la première fente axiale du moyeu est de réalisation ouverte vers l'espace environnant, c'est-à-dire qu'elle débouche notamment dans ledit espace environnant ;
et/ou **par le fait que**
la seconde fente axiale dudit moyeu est de réalisation ouverte vers ledit espace environnant, c'est-à-dire qu'elle débouche notamment dans ledit espace environnant.

4. Liaison par serrage selon l'une des revendications précédentes,
**caractérisée par le fait que**
la bague d'arrêt (21) pénètre, en partie, dans une rainure annulaire façonnée dans la bague de serrage (2), notamment au niveau de la face intérieure de ladite bague de serrage (2) qui pointe vers le moyeu et, en partie, dans une rainure annulaire façonnée dans ledit moyeu.

5. Liaison par serrage selon l'une des revendications précédentes,
**caractérisée par le fait que**
la bague d'arrêt (21) est munie d'une région additionnelle faisant saillie vers l'intérieur dans le sens radial et pénétrant, au moins en partie, dans l'autre fente axiale considérée, ou dans une fente axiale additionnelle, notamment en vue du blocage rotatoire de ladite bague d'arrêt (21) à proprement parler.

6. Liaison par serrage selon l'une des revendications précédentes,
**caractérisée par le fait que**
les régions de la bague d'arrêt (21) qui font saillie vers l'extérieur, dans le sens radial, pénètrent dans la fente de part et d'autre de la discontinuité de ladite bague d'arrêt (21) située en un emplacement du pourtour.

7. Liaison par serrage selon l'une des revendications précédentes,
**caractérisée par le fait que**
la bague d'arrêt (21) est produite sous la forme d'une pièce emboutie en tôle.

8. Motoréducteur comprenant un adaptateur pourvu d'une liaison par serrage conforme à l'une des revendications précédentes,
sachant que le moyeu est un arbre dudit adaptateur, et que l'arbre supplémentaire est un arbre rotorique d'un moteur électrique dudit motoréducteur,
**caractérisé par le fait que**
l'arbre de l'adaptateur est monté à rotation au moyen d'un palier (5) intégré dans une partie de carter (3, 4) dudit adaptateur.

9. Motoréducteur selon l'une des revendications précédentes,
**caractérisé par le fait que**
l'arbre de l'adaptateur est relié, avec verrouillage rotatif, à un arbre d'entrée d'une transmission.
